# EUROPEAN PATENT APPLICATION

(11) **EP 2 799 224 A1**
(43) Date of publication of application: **05.11.2014**
(21) Application number: 12861509.3
(22) Date of filing: 21.12.2012
(51) Int. Cl.: B32B 7/06, B32B 3/30, G02B 1/11, G02F 1/1335, G09F 9/00

(54) **LAMINATE STRUCTURE**

(30) Priority: 27.12.2011 JP 2011284679
(71) Applicant: Mitsubishi Rayon Co., Ltd., Tokyo 100-8253 (JP)
(72) Inventor: NAKAI Yusuke, Otake-shi Hiroshima 739-0693 (JP); MAKINO Shinji, Otake-shi Hiroshima 739-0693 (JP)
(74) Representative: Hoffmann Eitle
(86) International application number: PCT/JP2012/083247
(87) International publication number: WO 2013/099798

(57) **Abstract**

A laminate structure (1) includes an article (10) having a microrelief structure (16) on the surface thereof, and an adhesive film (20) being in contact with the microrelief structure (16)-side surface of the article (10), in which an average interval between projection portions (14) in the microrelief structure (16) is 400 nm or less, a low-speed peeling strength of the adhesive film (20) to an acrylic resin plate measured by a specific method based on JIS Z0237:2009 is 0.01 N/25 mm or more and less than 2.5 N/25 mm, and a ratio between a high-speed peeling strength and the low-speed peeling strength (high-speed peeling strength/low-speed peeling strength) of the adhesive film (20) to the acrylic resin plate is less than 2.

## Description

### TECHNICAL FIELD

The present invention relates to a laminate structure, in which as for an article having a microrelief structure on a surface thereof, the surface on the side of the microrelief structure is protected by an adhesive film.

This application claims priority under the benefit of JP 2011-284679 A, filed on December 27, 2011 in Japan, the entire contents of which are incorporated herein by reference.

### BACKGROUND ART

For various image display units, lens, show-windows, and the like, a degradation of visibility is a problem because the light of the sun, a lighting, and the like is reflected on the surface. Therefore, there are the occasions in which an anti-reflection film is attached on the surface.

As an anti-reflection film, the film having a microrelief structure on the surface of a substrate is took noticed. Especially, the rugged microrelief structure arranged with a plurality of projections (projection portions) having an approximately cone shape, an approximately pyramid shape or the like, which is referred to as the so-called "Moth-Eye structure", becomes a means for an effective reflection-prevention by continuously increasing a refractive index from the refractive index of air to the refractive index of a material.

As a method for forming a microrelief structure on the surface of a substrate, a method is in the spotlight, in which anodized alumina having a microrelief structure constituted of a plurality of micro-pores (recessed portions) formed by anodizing is used and the microrelief structure of the anodized alumina is transferred to the surface of a substrate (PTL 1).

As for an article having a microrelief structure on the surface thereof such as an anti-reflection film, an adhesive film is attached to the surface formed with the microrelief structure during a processing step or a period between shipping and using with the purpose of preventing to stick of stains or the like from being attached to the surface or of maintaining (protecting) the shape of the microrelief structure.

However, the article formed with a microrelief structure on the surface of a substrate by transferring the microrelief structure of anodized alumina in which an average interval of micro-pores is a visible light wavelength or less, has a narrow average interval of projection portions and also has small area of the top part of the projection portion being in contact with the adhesive film Therefore, it is difficult to attach the conventional adhesive film to be attached to a prism structure or an anti-glare structure having an average interval of the projection portion larger than the visible light wavelength, to the surface of the microrelief structure in which an average interval of the projection portion is a visible light wavelength or less. In other words, in the conventional adhesive film, sufficient adhesion force is not easy to be achieved; on the other hand, adhesion force is likely to become excessive.

Accordingly, in order for an adhesive film to be easily attached, an attached adhesive film not to be unconsciously peeled off, and an adhesive film to be easily peeled off when the adhesive film is intentionally peeled off, a method for attaching an adhesive film having an initial adhesion strength of 0.03 N/25 mm or less to an uneven portion, to a surface of an article in which an uneven portion having a microrelief structure and non-uneven portion without the microrelief structure are formed on the surface thereof, has been proposed (PTL 2).

### CITATION LIST

### PATENT LITERATURE

[PTL 1]: JP 2005-156695 A
[PTL 2]: JP 2010-107858 A

### SUMMARY OF INVENTION TECHNICAL PROBLEM

However, as for the article attached with an adhesive film disclosed in PTL 2, it is not considered that the article is processed into a desired shape by punching processing, NC cutting, and the like. In the case where the entire surface is to be uneven portions having a microrelief structure by processing, there are problems in that an adhesive film is peeled off during a processing step, and also after processing, a new adhesive film cannot be attached.

### SOLUTION TO PROBLEM

In order for an adhesive film attached to the surface of the microrelief structure to be not peeled off, an adhesive film having high adhesion force is used. However, in such a case, after peeling off the adhesive film, there are the cases that adhesive materials of the adhesive film are remained on a recessed portion of the microrelief structure of the article (adhesive residue). When the adhesive residue is remained on the recessed portion of the microrelief structure, optical performance of the article is easily deteriorated. Especially, when an adhesive film is attached to the surface of the Moth-Eye structure, adhesive materials are easily remained on the recessed portion when the adhesive film is peeled off, and thus an anti-reflection performance is deteriorated.

The present invention is performed in the light of the above reasons, and provides a laminate structure, in which an adhesive film attached to the microrelief-side surface of an article is not peeled off unconsciously, the adhesive film is easily peeled off with good usability when the adhesive film is intentionally peeled off, and also the adhesive residue is very few in amount on the microrelief structure.

On closer examination, the present inventors found that by using an adhesive film having a specific adhesive property, it is possible to attach an adhesive film to the microrelief structure-side surface of an article; also after peeling off the adhesive film, adhesive residue is very few in amount on the microrelief structure; thus anti-reflection performance is not deteriorated; and as a result, it is possible to protect the microrelief structure from cracks or an adherence of stains during a processing step or the period between shipping and using. Therefore, the inventors completed the invention.
(1) The laminate structure according to a first embodiment of the invention includes an article having the surface of a microrelief structure and an adhesive film being in contact with the microrelief structure-side surface of the article, in which an average interval between projection portions in the microrelief structure is 400 nm or less, low-speed peeling strength (P) of the adhesive film measured by the following method based on JIS Z0237:2009 is 0.01 N/25 mm or more and less than 2.5 N/25 mm, and the ratio between high-speed peeling strength (Q) and low-speed peeling strength (P) (High-speed peeling strength (Q)/low-speed peeling strength (P)) of the adhesive film measured by the following method based on JIS Z0237:2009 is less than 2.

### (Method for measuring peeling strength: first)

The adhesive film is put on the surface of an acrylic resin plate such that the surface of the side being in contact with the microrelief structure-side surface of the article is contacted to the acrylic resin plate; then the adhesive film is attached to the acrylic resin plate by performing 1-return of 2 kg roll on the adhesive film; the attached adhesive film is left under a constant temperature of 23°C for 30 minutes; and then the adhesive film is peeled off in 180° to the surface of the acrylic resin plate at a peeling speed of 0.3 m/min (in the case of measuring a low-speed peeling strength (P)) or 10 m/min (in the case of measuring a high-speed peeling strength (Q)) to measure the peeling strength required for the peeling.
(2) For the laminate structure of the above (1), the low-speed peeling strength (P) of the adhesive film is preferably 1.0 N/25 mm or less.
(3) For the laminate structure of the above (1) or (2), the ratio between the high-speed peeling strength (S) and low-speed peeling strength (R) (High-speed peeling strength (S) / low-speed peeling strength (R)) of the adhesive film measured by the following method is preferably 2 or less.

### (Method for measuring peeling strength: second)

The adhesive film is put on the surface of an article such that the surface of the side being in contact with the microrelief structure-side surface of the article is contacted to the article; then the adhesive film is attached to the microrelief structure by performing 1-return of 2 kg roll on the adhesive film; the attached adhesive film is left under a constant temperature of 23°C for 30 minutes; and then the adhesive film is peeled off in 180° to the microrelief structure-side surface at a peeling speed of 0.3 m/min (in the case of measuring a low-speed peeling strength (R)) or 10 m/min (in the case of measuring a high-speed peeling strength (S)) to measure the peeling strength required for the peeling.
(4) For the laminate structure of the above (1) to (3), the microrelief structure is preferably the structure prepared by transferring a microrelief structure of anodized alumina.

### EFFECT OF THE INVENTION

According to the laminate structure of the invention, an adhesive film attached to the microrelief structure-side surface of an article is not peeled off unconsciously, the adhesive film is easily peeled off with good usability when the adhesive film is intentionally peeled off, and also the adhesive residue is very few in amount on the microrelief structure.

### BRIEF DESCRIPTION OF DRAWINGS

Fig. 1 is a cross-sectional diagram illustrating an example of the laminate structure of the invention;
Fig. 2 is a cross-sectional diagram illustrating an example of an article having a microrelief structure on the surface thereof in the laminate structure of the invention;
Fig. 3 is a structure diagram illustrating an example of a device for manufacturing the laminate structure of the invention; and
Fig. 4 is a cross-sectional diagram illustrating a process for manufacturing a mold having the surface of anodized alumina.

### DESCRIPTION OF EMBODIMENTS

In the present specification, "(meth)acrylate" means acrylate or methacrylate, "(meth)acrylic acid" means acrylic acid or methacrylic acid, "(meth)acrylonitrile" means acrylonitrile or methacrylonitrile, and "(meth)acrylamide" means acrylamide or methacrylamide.

In addition, in the present specification, "active energy ray" means visible rays, ultraviolet rays, electron beam, plasma, heat rays (infrared rays, and the like), and the like.

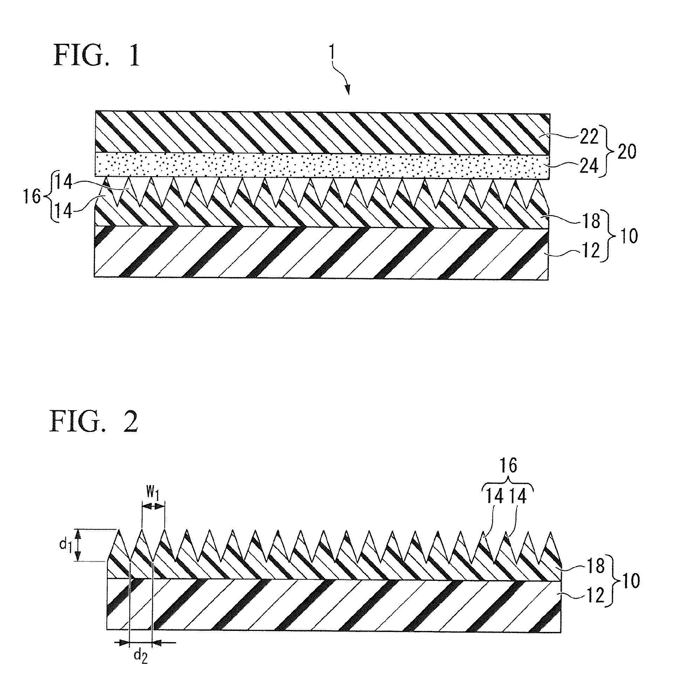

In Figs. 1 to 4, since the respective layers have an identifiable size in the drawings, scales are different at all layers.

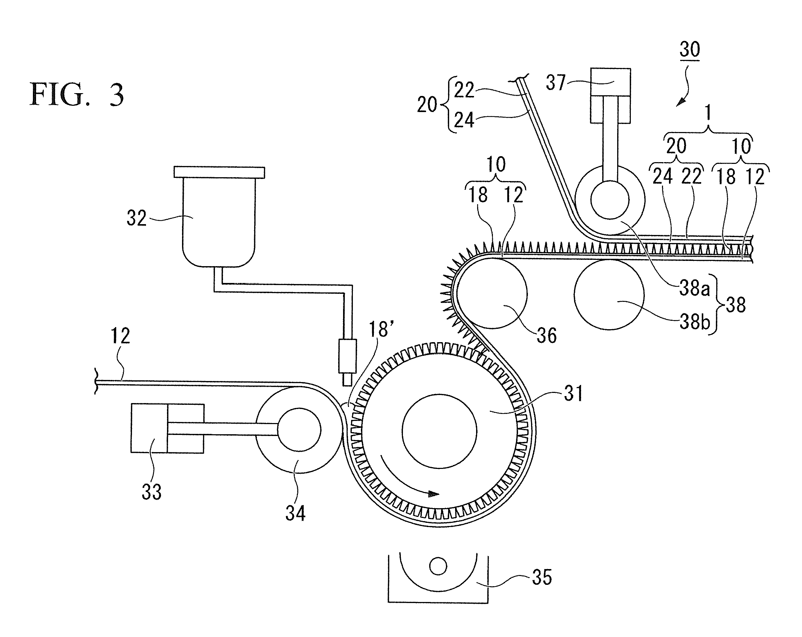

In addition, in Figs. 2 and 3, the same reference numerals indicate the same elements as Fig. 1, and thus the specifications for the same elements will not be provided.

### <Laminate structure>

Fig. 1 is a cross-sectional diagram illustrating an example of the laminate structure of the invention. The laminate structure 1 includes an article 10 having a ragged microrelief structure 16 on the surface thereof, and an adhesive film 20 being in contact with the microrelief structure 16-side surface of the article 10.

### (Article)

As illustrated in Fig. 2, the article 10 includes a substrate 12 and a cured resin layer 18, which is formed on the surface of the substrate 12, is consisted of a curing material of an active energy rays-curable resin composition to be described below, and has a microrelief structure 16-side surface arranged with a plurality of projection portions 14 on the surface thereof

### Substrate:

A material for a substrate 12 should penetrate light, and examples thereof include methylmethacrylate (co)polymer, polycarbonate, styrene (co)polymer, methylmethacrylate-styrene copolymer, cellulose-diacetate, cellulose triacetate, cellulose acetate butyrate, polyester, polyamide, polyimide, polyethersulfone, polysulfone, polypropylene, polymethyl pentene, polyvinyl chloride, polyvinyl acetal, polyether ketone, polyurethane, glass, and the like.

A substrate 12 is prepared by a known method such as an injection molding method, an extrusion method, and a cast molding method.

A shape of the substrate 12 may be properly selected, depending on an article 10 to be prepared, and when the article 10 is an anti-reflection film, and the like, the shape of the substrate 12 may be preferably a sheet shape or a film shape.

An adhesive material layer (not illustrated) and a separate film (not illustrated) may be formed on the surface (the back side) of the side of the substrate 12 without a cured resin layer 18. By preparing the adhesive material layer, it can be easily attached to the article (front face plate, polarization device, and the like) in other film shapes or a sheet shape.

On the surface of the substrate 12, various coating treatments, corona discharge treatments, and roughening treatments may be performed in order to improve adhesion with an active energy rays-curable resin composition, an antistatic property, an excoriation resistance, and weather resistance.

### Cured resin layer:

The cured resin layer 18 has a microrelief structure 16 on the surface thereof The cured resin layer 18 may be formed on the entire surface of an article 10 and on a part of the surface of the article 10.

The microrelief structure 16 has a plurality of projection portions 14 consisted of a curing material of an active energy rays-curable resin composition to be described below, and is formed by transferring a microrelief structure of anodized alumina.

It is preferable that the microrelief structure 16 have a so-called Moth-Eye structure prepared by arranging a plurality of projections (projection portions) such as an approximately cone shape and an approximately pyramid shape. By having the microrelief structure 16 on the surface, the article 10 having excellent anti-fouling property is obtained. Especially, the Moth-Eye structure having an average interval between the projection portions 14 of visible light wavelength or less becomes an effective means for antireflection by continuously increasing a refractive index from the refractive index of air to the refractive index of a material.

An average interval between the projection portions 14 is 400 nm or less, preferably 300 nm or less, and more preferably 250 nm or less. When the average interval between the projection portions 14 is 400 nm or less, in the case of using a hydrophobic material as a curing material of an active energy-rays curable resin composition, a hydrophobic property is likely to be strongly expressed, and on the other hand, in the case of using a hydrophilic material as a curing material of an active energy-rays curable resin composition, a hydrophilic property is likely to be strongly express. Therefore, it is possible to impart an excellent anti-fouling property to the article 10. Especially, when the average interval between the projection portions 14 is visible light wavelength or less, that is, 400 nm or less, reflectivity is low and also an article 10 having little wavelength dependence of the reflectivity is obtained.

The average interval between the projection portions 14 is preferably 25 nm or more and more preferably 80 nm or more in point of easy formation of the projection portions 14.

The average interval between the projection portions 14 is obtained by taking an average of the values prepared by measuring 10 cases of the intervals (in Fig. 2, a distance (W₁) from the center of the projection portion 14 to the center of the projection portion 14 that is adjacent therewith) between the projection portions 14 that are adjacent to each other through the observation by an electron microscope.

A height of the projection portion 14 is preferably 100 to 400 nm and more preferably 150 to 300 nm. When the height of the projection portion 14 is 100 nm or more, the reflectivity sufficiently becomes low, and also a wavelength dependence of the reflectivity becomes low. When the height of the projection portion 14 is 400 nm or less, an excoriation resistance of the projection portions becomes preferable. The height of the projection portion 14 is obtained by taking an average of the values obtained by measuring 10 cases of the heights (in Fig. 2, a vertical distance (d₁) from the top part of the projection portion 14 to the lower part of the recessed portion that is adjacent with the projection portion 14) of the projection portions 14 through the observation by an electron microscope.

An aspect ratio of the projection portion 14 (a height of the projection portion 14/a length of the bottom of the projection portion 14) is preferably 1 to 5, more preferably 1.2 to 4, and most preferably 1.5 to 3. When the aspect ratio of the projection portion 14 is 1 or more, the reflectivity sufficiently becomes low. When the aspect ratio of the projection portion 14 is 5 less, the excoriation resistance of the projection portion 14 becomes preferable.

A length of the bottom of the projection portion 14 in Fig. 2 is a length (d₂) of the lower part of the cross section when the projection portion 14 is cut in a height direction thereof.

A shape of the projection portion 14 is preferably a shape that the cross-section area of the projection portion 14 in the direction that is at right angles to the height direction is continuously increased in a depth direction from the top part thereof, and in other words, the shape of the cross section of the projection portion 14 in a height direction is preferably a shape such as a triangular shape, a trapezoid, and a bell shape.

### Use of article:

The article 10 has a microrelief structure on the surface thereof, and thus, is suitable for an optical article, especially, an antireflection article such as an anti-reflection film, and an antireflection structure in a stereoscopic shape.

When the article 10 is an anti-reflection film, it is used by adhering on the surface of an object such as an image display device (liquid crystal display device, a plasma display panel, an electro luminescence display, a cathode tube display device, and the like), a lens, show-windows, an instrument window, a lighting material, glasses lens, a 1/2 wavelength plate, and a low-path filter.

When the article 10 is an antireflection structure in a stereoscopic shape, the antireflection structure is prepared by using a transparent substrate in a shape depending on a use in advance, and then may be used as a material constituting the surface of the object.

When the object is an image display device, the anti-reflection film may be attached to the front face plate thereof, not limited to the surface thereof, and the front face plate itself may be consisted of the article 10.

As other uses of the article 10, there may be an optical material (optical waveguide, relief hologram, a polarization separation element, a quartz crystal device, and the like), a cell culture sheet, a super water-repellent film, a super hydrophilic film, and the like.

### Other embodiments of article:

An article in the invention is not limited to the illustrated examples as long as it has a microrelief structure on the surface thereof.

For example, as illustrated in the figures, the microrelief structure is formed on the surface of the cured resin layer 18, but may be directly formed on the surface of the substrate 12, without forming the cured resin layer 18. However, it is preferable that the microrelief structure be formed on the surface of the cured resin layer 18 in point of being capable of effectively forming the microrelief structure using a mold in a roll shape to be described below.

The surface of the article may have the region (I) of the microrelief structure, the region (II) that has a higher peeling strength with an adhesive film than the region (I), and the region (III) that is adjacent with the region (II) and has a lower peeling strength with the adhesive film than the region (II).

An article has a substrate, an intermediate layer that is formed on the surface of the substrate so as to expose at least a part of the surface of the substrate, and a cured resin layer that is formed on the surface of the intermediate layer so as to expose at least a part of the surface of the intermediate layer and has a microrelief structure on the surface thereof, in which the surface of the cured resin layer may be the region (I), the exposed surface of the intermediate layer may be the region (II), and the exposed surface of the substrate may be the region (III).

The region (III) is preferably located on the end of the surface of the article having the microrelief structure on the surface thereof.

### (Adhesive film)

The adhesive film 20 protects the surface of the article 10, and as illustrated in Fig. 1, is attached to the microrelief structure 16-side surface of the article 10. For this reason, the surface of the article 10 is not in contact with other objects, and cracks are hardly generated on the microrelief structure 16. In addition, impurities such as dust and chemicals are difficult to be infiltrated into the interface between the article 10 and the adhesive film 20, and thereby, sticking of stains would not be attached easily to the surface of the article 10.

As illustrated in Fig. 1, the adhesive film 20 has a film substrate 22, and an adhesion material layer 24 including an adhesive material, which is formed on the surface of the film substrate 22.

### Peeling strength of adhesive film to acrylic resin plate:

For the adhesive film 20, a low-speed peeling strength (P) measured by a first method of the method based on JIS Z0237:2009 is 0.01 N/25 mm or more and less than 2.5 N/25 mm and also the ratio of the high-speed peeling strength (Q) to the low-speed peeling strength (P) (High-speed peeling strength (Q)/Low-speed peeling strength (P)) measured by the method based on JIS Z0237:2009 is less than 2.

When the low-speed peeling strength (P) is 0.01 N/25 mm or more, there are no cases that the adhesive film attached to the surface of the microrelief structure side of the article is unintentionally peeled off. The low-speed peeling strength (P) is preferably 0.03 N/25 mm or more and more preferably 0.1 N/25 mm or more.

When the low-speed peeling strength (P) is less than 2.5 N/25 mm, adhesive residue on the microrelief structure 16 of the article 10 is hardly generated, and when the adhesive film is intentionally peeled off, it can be easily peeled off, and thus, the workability in the case of peeling off the adhesive film from the article 10 is preferable. In other words, when the low-speed peeling strength (P) is 2.5 N/25 mm or more, the peeling strength is excessively strong, and thus, the material strength of the adhesive material layer 24 is impatient of the peeling strength and cohesive failure of the adhesive material layer 24 is generated. Therefore, a part of the adhesive material layer 24 is remained on the microrelief structure 16 of the article 10, and thereby, adhesive residue is generated. The low-speed peeling strength (P) is preferably 2.0 N/25 mm or less, more preferably 1.50 N/25 mm or less, and most preferably 1.0 N/25 mm or less.

When the high-speed peeling strength (Q)/low-speed peeling strength (P) is less than 2, the adhesive residue on the recessed portion of the microrelief structure of the article 10 is hardly generated. When the high-speed peeling strength (Q) is less than the low-speed peeling strength (P), the adhesive material layer 24 is hard such that an anchoring effect is hardly expressed. In such a case, since the adhesive material layer 24 hardly follows the microrelief structure, the adhesive material is not remained on the lower part of the recessed portion. In addition, as described in JP 4499995 B, the adhesive force is not excessive when the adhesive film 20 is peeled off from the article 10 in a high speed, and thus the workability becomes preferable. The high-speed peeling strength (Q)/low-speed peeling strength (P) is preferably 1.5 or less and more preferably 1.3 or less.

The high-speed peeling strength (Q)/low-speed peeling strength (P) is preferably 0.1 or more and more preferably 0.3 or more in point of the handling and workability.

According to the invention, as the method of using less than 2 of the high-speed peeling strength (Q)/low-speed peeling strength (P), there may be a method of thinning a thickness of the adhesive material layer 24, a method of co-polymerizing monomers of high glass-transition temperature (Tg) as a component of the acrylic-based polymer constituting the adhesive material, a method of increasing crosslink density, and the like.

### Peeling strength of adhesive film to microrelief structure of article:

For the adhesive film 20, the ratio of the high-speed peeling strength (S) to the low-speed peeling strength (R) (High-speed peeling strength (S)/low-speed peeling strength (R)) of the adhesive film measured by a second method of the above method is preferably 2 or less.

When the high-speed peeling strength (S)/low-speed peeling strength (R) is 2 or less, adhesive residue on the recessed portion of the microrelief structure of the article 10 is hardly generated. When the high-speed peeling strength (S) is less than the low-speed peeling strength (R), the adhesive material layer 24 is hard such that an anchoring effect is hardly expressed. In such a case, since the adhesive material layer 24 hardly follows the microrelief structure, the adhesive material is not remained on the lower part of the recessed portion. In addition, as described in JP 4499995 B, the adhesive force is not excessive when the adhesive film 20 is peeled off from the article 10 in a high speed, and thus the workability becomes preferable. The high-speed peeling strength (S)/low-speed peeling strength (R) is preferably 1.5 or less and more preferably 1.3 or less.

The high-speed peeling strength (S)/low-speed peeling strength (R) is preferably 0.1 or more and more preferably 0.3 or more in point of the handling and workability.

According to the invention, as the method of using 2 or less of the high-speed peeling strength (S)/low-speed peeling strength (R), there may be a method of thinning a thickness of the adhesive material layer 24, a method of co-polymerizing monomers of high glass transposition point (Tg) as a component of the acrylic-based polymer constituting the adhesive material, a method of increasing crosslink density, and the like.

### Film substrate:

Materials of the film substrate 22 may include a crystalline ethylene-based resin, crystalline propylene homopolymer, a crystalline propylene-based resin (random copolymer of propylene, and α-olefin and/or ethylene, block copolymer of propylene, and α-olefin and/or ethylene, and the like), other olefin-based resins (poly(1-butene), poly(4-methyl-1-pentene), and the like), an acrylic-based resin (polymethylacrylate, polymethylmethacrylate, ethylene-ethylacrylate copolymer, and the like), a styrene-based resin (butadiene-styrene copolymer, acrylonitrile-styrene copolymer, polystyrene, styrene-butadiene-styrene block copolymer, styrene-isoprene-styrene block copolymer, styrene-acrylic acid copolymer, and the like), a vinyl chloride resin, a vinyl fluoride-based resin (polyvinyl fluoride, polyvinylidene fluoride, and the like), polyamide (nylon 6, nylon 66, nylon 12, and the like), a saturated ester-based resin (polyethylene terephthalate, polybutylene terephthalate, and the like), polycarbonate, polyphenylene oxide, polyacetal, polyphenylene sulfide, a silicone resin, a thermoplastic urethane resin, polyetheretherketone, polyetherimide, various thermoplastic elastomers, cross-linked products thereof, and the like.

A thickness of the film substrate 22 may be properly selected in the range that does not damage adhesion, and the like. Generally, it is 3 to 500 µm and preferably 5 to 200 µm. When the thickness of the film substrate 22 is less than 3 µm, a crease and the like are likely to occur in a process of preparing the adhesive film 20, and thus, it is difficult to cause the adhesive film 20 to be attached to the article 10 in some cases. When the thickness of the film substrate 22 exceeds 500 µm, it is difficult to treat the adhesive film 20 in some cases.

If necessary, the film substrate 22 may be subjected to an anti-fouling treatment, an acid treatment, an alkali treatment, a primer treatment, an anchor coat treatment a corona treatment, a plasma treatment, an ultraviolet rays treatment, an antistatic treatment, and the like.

### Adhesive material layer:

Adhesive materials of the adhesive material layer 24 may include ethylene-vinyl acetate copolymer, linear low-density polyethylene, ethylene-α-olefin copolymer, styrene-butadiene-styrene block copolymer, styrene-isoprene-styrene block copolymer, styrene-ethylene-butylene-styrene block copolymer, styrene-butadiene random copolymer, hydrogenated styrene-butadiene random copolymer, acrylic-based polymer, and the like as a main polymer.

As a main polymer of the adhesive material, the acrylic-based polymer is preferable in point of obtaining the balance of adhesion and a peeling property. The acrylic-based polymer is prepared by a homo-polymerizing or co-polymerizing one or two or more kinds of monomers such as (meth)acrylate having an alkyl group of 1 to 18 carbon atoms, and if necessary, one or two or more kinds of co-polymeric modified monomers according to the known polymerizations such as a solution polymerization and emulsion polymerization. In addition, the distribution of the molecular weights of main polymers is allowed to be narrow according to a living radical polymerization, and the like, and thus, a decrease in adhesive residue is available when peeling the adhesive film 20 off.

(Meth)acrylate having an alkyl group of 1 to 18 carbon atoms may be ester of (meth)acrylic acid having a butyl group, a 2-ethyl hexyl group, an isooctyl group, an isononyl group, an ethyl group, a methyl group, and the like.

Examples of copolymerized modified monomers may include (meth)acrylonitrile, vinyl acetate, styrene, (meth)acrylic acid, maleic anhydride, vinyl pyrrolidone, (meth)acrylate having a glycidyl group, a dimethylamino ethyl group, or a hydroxyl group, (meth)acrylamide, vinyl amine, allyl amine, ethyleneimine, and the like.

The acrylic-based polymer may be used as a main polymer of adhesive material as it is, but generally, is used in combination with a cross-linking agent for the purpose of improving the cohesive force of the adhesive material. For preparing a crosslinked structure of the acrylic-based polymer, multifunctional (meth)acrylate, and the like are added as an internal cross-linking agent when synthesizing the acrylic-based polymer, or a multifunctional epoxy-based compound, a multifunctional isocyanate-based compound, and the like may be added as an external cross-linking agent after synthesizing the acrylic-based polymer. In addition, a cross-linking treatment may be performed by radiation irradiation. Among them, a preferable method for forming the cross-linking structure is a method of combining the multifunctional epoxy compound or multifunctional isocyanate compound as an external cross-linking agent. Here, the multifunctional property means di- or more functional property.

The multifunctional epoxy compound may include various compounds having two or more epoxy groups in a molecule (sorbitol tetraglycidyl ether, trimethylol propane glycidyl ether, tetraglycidyl-1,3-bisamino methylcyclohexane, tetraglycidyl-m-xylene diamine, triglycidyl-p-aminophenol, and the like).

The multifunctional isocyanate compound may include various compounds having two or more isocyanate groups in a molecule (diphenyl methane diisocyanate, tolylene diisocyanate, hexamethylene diisocyanate, and the like).

The cross-linking agent may be used singly or in combination of two or more kinds.

The amount of the cross-linking agent used may be properly selected based on the molecular weight and composition of acrylic-based polymer.

A cross-linking catalyst such as dibutyl tin laurate that is generally used as an adhesive material in order to promote the reaction of cross-linking agent may be combined with an adhesive material.

In addition, the adhesive material may be combined with the conventional additives such as tackifier, filler a pigment, a coloring agent, and antioxidant, if necessary. In addition, a decrease in the amount of impurities included in additives such as a cross linking agent is available for decreasing adhesive residue when peeling the adhesive film 20 off.

A thickness of the adhesive material layer 24 may be properly selected in the range that does not damage adhesion, and the like, and generally is 1 to 100 µm, preferably 3 to 50 µm, and more preferably 5 to 30 µm.

### Peeling film:

A peeling film (not illustrated) that is in contact with the adhesive material layer 24 for the purpose of anti-fouling may be laminated on the adhesive film 20.

As a material for the peeling film, there are various resins, and the like, that are previously exemplified in the description of the film substrate 22. Among them, from the viewpoint of the peeling property, polystyrene, saturated ester-based resin, and polyamide are preferable, and polyethylene terephthalate and polyamide are more preferable.

In order to increase the peeling property of the peeling film, the surface of the peeling film side that is in contact with the adhesive material layer 24 may be treated by silicone, and the like in the range that does not damage the effect of the invention, if necessary.

### Method for preparing adhesive film:

As a method for preparing the adhesive film 20, there are known methods such as a co-extrusion method, a laminate molding method, a flow casting method, and a coating method.

The co-extrusion method may include extruding materials of the film substrate 22 and adhesive materials in a melting state according to the known method such as a T-die molding method and inflation molding method, laminating, and then cooling the resultant by a cooling means such as a cooling roll.

The laminate molding method may include preparing the film substrate 22 according to an extrusion molding method in advance, extruding the adhesive material in a melting state on the surface of the film substrate 22, laminating, and then cooling the resultant by a cooling means such as a cooling roll.

The flow casting method or the coating method may include dissolving or dispersing a main polymer, and the like in an organic solvent or mixed organic solvents such as toluene and ethyl acetate to prepare an adhesive material solution having about 10 to 40 mass% of the solid concentration, and directly attaching the adhesive material solution on the surface of the film substrate 22 according to an appropriate development method such as a flow casting method and coating method, or forming the adhesive material layer 24 on the surface of the peeling film based on the above content, and then transferring and attaching the adhesive material layer 24 to the surface of the film substrate 22.

### Other embodiment of adhesive film:

Regarding the adhesive film in the invention, as long as the adhesive film includes at least one layer of film substrate and at least one layer of the adhesive material layer, a layer configuration or the number of laminated layers is not particularly limited, but generally about 2 to 7 layers.

Specific examples of the layer configuration of the adhesive film may include a film substrate/adhesive material layer, a film substrate/adhesive material layer/peeling film, a film substrate/adhesive material layer/film substrate/adhesive material layer, a film substrate/adhesive material layer/film substrate/adhesive material layer/peeling film, and the like.

### <Device for manufacturing laminate structure>

Fig. 3 is a structure diagram illustrating an example of a device for manufacturing the laminate structure of the invention. A manufacturing device 30 includes a roll-shaped mold 31 having a microrelief structure on the surface thereof, a tank 32 that receives an active energy rays-cured resin composition 18', a nip roll 34 including an air pressure cylinder 33, an active energy rays-irradiating apparatus 35, a peeling roll 36, and a pair of nip rolls 38 including an air pressure cylinder 37.

In addition, the manufacturing device 30 illustrated in Fig. 3 is a device for continuously manufacturing the laminate structure 1 after manufacturing the article 10.

### (Mold)

The mold 31 is a mold for transferring the microrelief structure to the active energy rays-cured resin composition 18', and has anodized alumina on the surface thereof. It is possible for the mold having the anodized alumina on the surface thereof to have large area, and to easily manufacture the roll-shaped mold.

The anodized alumina is a porous oxide layer of aluminum (alumite), and has a plurality of pores (recessed portions) on the surface thereof.

The mold having anodized alumina on the surface thereof may be prepared through the following processes (a) to (e), for example:
(a) forming oxide layer by anodizing an aluminum substrate in an electrolyte;
(b) removing the oxide layer and then forming a pore generation point of the anodizing;
(c) re-anodizing the aluminum substrate in an electrolyte and then forming an oxide layer having pores at the pore generation point;
(d) enlarging the diameters of the pores; and
(e) repeating the above processes (c) and (d).

### Process (a):

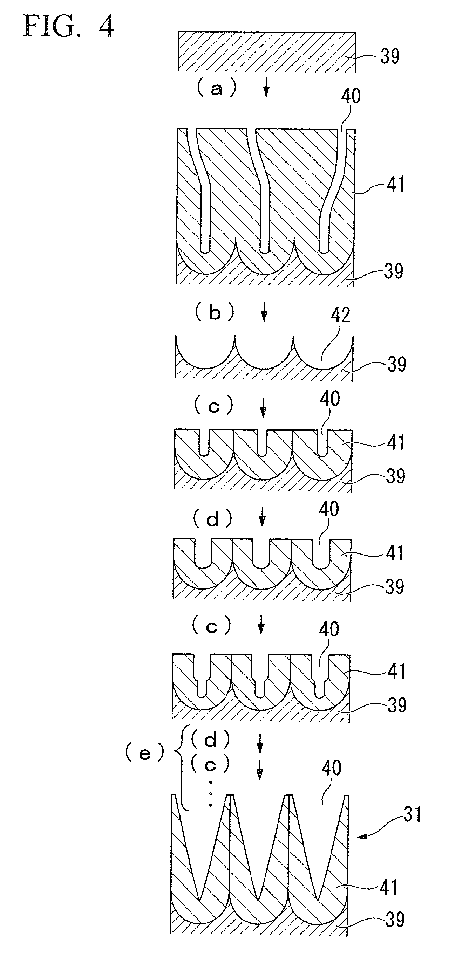

As illustrated in Fig. 4, when an aluminum substrate 39 is anodized, an oxide layer 41 having pores 40 is formed.

A purity of the aluminum is preferably 99% or more, more preferably 99.5% or more, and most preferably 99.8% or more. When the purity of the aluminum is low, at the time of anodizing, a relief structure having a size to scatter the visible light by the segregation of impurities may be formed or the regularity of the pores obtained by anodizing may be reduced in some cases.

Examples of the electrolyte may include sulfuric acid, oxalic acid, phosphoric acid, and the like.

In case of using oxalic acid as electrolyte:

The concentration of the oxalic acid is preferably 0.7 M or less. When the concentration of the oxalic acid exceeds 0.7 M, a current value is excessively increased, and thus, the surface of the oxide layer becomes coarse in some cases.

When formation voltage is 30 to 60 V, the anodized alumina having pores having high regularity of 100 nm in a period can be obtained. When the formation voltage is higher or lower than the above range, the regularity tends to decrease.

The temperature of the electrolyte is preferably 60°C or lower, and more preferably 45 °C or lower. When the temperature of the electrolyte exceeds 60°C, the phenomenon that is so-called "burning" is likely to occur, and accordingly, the pores are destroyed, or the surface is melted and the regularity of pores is distorted in some cases.

In case of using sulfuric acid as electrolyte:

The concentration of the sulfuric acid is preferably 0.7 M or less. When the concentration of the sulfuric acid exceeds 0.7 M, the current value becomes excessively high, and thus, constant voltage cannot be maintained in some cases.

When the formation voltage is 25 to 30 V, the anodized alumina having pores having high regularity of 63 nm in a period can be obtained. When the formation voltage is higher or lower than the above range, the regularity tends to decrease.

The temperature of the electrolyte is preferably 30°C or lower, and more preferably 20°C or lower. When the temperature of the electrolyte exceeds 30°C, the phenomenon that is so-called "burning" is likely to occur, and accordingly, the pores are destroyed, or the surface is melted and the regularity of pores is distorted in some cases.

### Process (b):

As illustrated in Fig. 4, the oxide layer 41 is first removed, and then by making it a pore generation point 42 of the anodizing, the regularity of pores can be improved.

A method for removing the oxide layer may be a method of removing the oxide layer by dissolving the oxide layer in a solution capable of selectively dissolving the oxide layer without dissolving aluminum. Such a solution may be a chromate/phosphoric acid mixed solution, and the like.

### Process (c):

As illustrated in Fig. 4, when the aluminum substrate 39 from which the oxide film is removed is re-anodized, the oxide layer 41 having the column-shaped pores 40 is formed.

The anodizing is performed in the same conditions as in the process (a). As the time for anodizing is longer, the deep pores can be obtained.

### Process (d):

As illustrated in Fig. 4, the treatment for enlarging the diameter of the pore 40 (hereinafter, referred to as an enlarging treatment of the diameter of pore) is performed. The enlarging treatment of the diameter of the pore is a treatment for enlarging the diameter of the pore obtained by anodizing through immersing in the solution to dissolve the oxide layer. Such a solution may be an aqueous solution of phosphoric acid of about 5 mass%, and the like.

As the time for enlarging the diameter of the pore is longer, the diameter of the pore becomes larger.

### Process (e):

As illustrated in Fig. 4, when the anodizing of the process (c) and the enlarging treatment of the diameter of the pore of the process (d) are repeated, the anodized alumina having the pores 40 with a shape of being continuously decreased in diameter from openings in a depth direction is formed, and the mold 31 having anodized alumina on the surface thereof is obtained. It is preferable to terminate the method in the process (d) in the end.

The number of repetition is preferably three or more times in the total, and more preferably five or more times. When the number of repetition is twice or less, since the diameter of the pore is discontinuously decreased, the effect on decreasing reflectivity of the cured resin layer 18 manufactured by using the anodized alumina having such pores is insufficient.

The surface of the anodized alumina may be treated with a releasing agent so as to easily isolate the anodized alumina from the cured resin layer 18. The treatment method may be a method of coating a silicone resin or fluorine-containing polymer, a method of depositing a fluorine-containing compound, a method of coating a fluorine-containing silane compound, and the like.

A shape of the pore 40 may be an approximately cone shape, pyramid shape, column shape, and the like, and preferably, like a cone shape and pyramid shape, the shape that continuously decrease the cross-section area of the pore in the direction, which is perpendicular to the depth direction, toward a depth direction from the most surface.

An average interval between the pores 40 is 400 nm or less, preferably 300 nm or less, and more preferably 250 nm or less. When the average interval between the pores 40 is 400 nm or less, the reflectivity is low, and also the article 10 having low wavelength dependence of the reflectance is obtained.

The average interval between the pores 40 is preferably 25 nm or more and more preferably 80 nm or more in point of the easiness of the formation of the pore 40.

The average interval between the pores 40 is obtained by taking an average of the values obtained by measuring 10 intervals between the pores 40 that are adjacent to each other through an observation of an electron microscope.

A depth of the pore 40 is preferably 100 to 400 nm and more preferably 150 to 300 nm.

The depth of the pore 40 is obtained by taking an average of the values obtained by measuring 10 depths of the pores 40 through an observation of an electron microscope.

An aspect ratio of the pore 40 (the depth of pore/length of opening of pore) is preferably 0.5 to 5, more preferably 0.7 to 4, and most preferably 1.0 to 3.

A length of the opening of the pore 40 is a length of the opening in a cutting section when the pore is cut in a depth direction from the deepest part of the pore 40.

### (Tank)

The tank 32 receives the active energy rays-curable resin composition 18' and supplies the active energy rays-curable resin composition 18' between the roll-shaped mold 31 and the belt-shaped substrate 12 moving along the surface of the mold 31.

### (Nip roll)

The nip roll 34 is arranged to face the roll-shaped mold 31. The nip roll 34 nips the substrate 12 and active energy rays-curable resin composition 18' along with the mold 31.

The nip pressure is adjusted by air pressure cylinder 33 included in the nip roll 34.

### (Active energy rays-irradiating apparatus)

The active energy rays-irradiating apparatus 35 is installed at the bottom of the roll-shaped mold 31, and allows the active energy rays-curable resin composition 18' filled between the substrate 12 and the mold 31 to be cured by irradiating active energy rays. By curing the active energy rays-curable resin composition 18', the cured resin layer 18 with the microrelief structure of the mold 31 transferred on the surface of the substrate 12 is formed.

As the active energy rays-irradiating apparatus 35, there may be a high pressure mercury lamp, a metal halide lamp, and the like. In this case, a light irradiation energy amount is preferably 100 to 10000 mJ/cm².

### (Peeling roll)

The peeling roll 36 is arranged closer to the downstream side than the active energy rays-irradiating apparatus 35, and allows the substrate 12 formed on the surface of the cured resin layer 18 to be peeled off from the roll-shaped mold 31.

### (A pair of nip rolls)

A pair of nip rolls 38 is arranged at the downstream side of the peeling roll 36, and allows the adhesive film 20 to be attached to the article 10.

A pair of nip rolls 38 is constituted of an elastic roll 38a having an outer circumference surface formed of elastic materials such as a rubber and a rigid roll 38b with an outer circumference surface formed of the material having high rigidity, for example, metals.

The nip pressure is adjusted by air pressure cylinder 37 included in the elastic roll 38a.

### (Active energy rays-curable resin composition)

The active energy rays-curable resin composition 18' appropriately includes a monomer, oligomer, and reactive polymers having a radical polymerizable functioning group and/or cationic polymerizable functioning group in a molecule, and may include non-reactive polymer.

The monomer having the radical polymerizable functioning group may be mono-functional monomers such as (meth)acrylates (methyl (meth)acrylate, ethyl (meth)acrylate, propyl (meth)acrylate, n-butyl (meth)acrylate, i-butyl (meth)acrylate, s-butyl (meth)acrylate, tert-butyl (meth)acrylate, 2-ethylhexyl (meth)acrylate, lauryl (meth)acrylate, alkyl (meth)acrylate, tridecyl (meth)acrylate, stearyl (meth)acrylate, cyclohexyl (meth)acrylate, benzyl (meth)acrylate, phenoxyethyl (meth)acrylate, isobornyl (meth)acrylate, glycidyl (meth)acrylate, tetrahydrofurfuryl (meth)acrylate, allyl (meth)acrylate, 2-hydroxyethyl (meth)acrylate, hydroxypropyl (meth)acrylate, 2-methoxyethyl (meth)acrylate, 2-ethoxyethyl (meth)acrylate, and the like), (meth)acrylic acid, (meth)acrylonitrile, styrenes (styrene, α-methyl styrene, and the like), and (meth)acrylamides ((meth)acrylamide, N-dimethyl (meth)acrylic amide, N-diethyl (meth)acrylamide, dimethylaminopropyl (meth)acrylamide, and the like); di-functional monomers such as ethyleneglycol di(meth)acrylate, tripropyleneglycol di(meth)acrylate, (ethylene oxide)-modified isocyanuric acid di(meth)acrylate, triethyleneglycol di(meth)acrylate, diethyleneglycol di(meth)acrylate, neopentylglycol di(meth)acrylate, 1,6-hexanediol di(meth)acrylate, 1,5-pentanediol di(meth)acrylate, 1,3-butyleneglycol di(meth)acrylate, polybutyleneglycol di(meth)acrylate, 2,2-bis(4-(meth)acryloxypolyethoxyphenyl)propane, 2,2-bis(4-(meth)acryloxyethoxyphenyl)propane, 2,2-bis(4-(3-(meth)acryloxy-2-hydroxypropoxy)phenyl)propane, 1,2-bis(3-(meth)acryloxy-2-hydroxypropoxy)ethane, 1,4-bis(3-(meth)acryloxy-2-hydroxypropoxy)butane, dimethyloltricyclodecane di(meth)acrylate, ethylene oxide addition di(meth)acrylate of bisphenol A, propylene oxide addition di(meth)acrylate of bisphenol A, hydroxyl pivalic acid neopentylglycol di(meth)acrylate, divinylbenzene, and methylenebisacrylamide; tri-functional monomers such as pentaerythritol tri(meth)acrylate, trimethylolpropane tri(meth)acrylate, (ethylene oxide)-modified trimethylol propane tri(meth)acrylate, (propylene oxide)-modified trimethylol propane triacrylate, (ethylene oxide)-modified trimethylol propane triacrylate, and (ethylene oxide)-modified isocyanuric acid tri(meth)acrylate; multi-functional monomers such as a condensation reaction mixture of succinic acid/trimethylolethane/acrylic acid, dipentaerythritol hexa(meth)acrylate, dipentaerythrythritol penta(meth)acrylate, ditrimethylolpropane tetra(meth)acrylate, ditrimethylolpropane tetraacrylate, and tetramethylol methane tetra(meth)acrylate; and di-functional or more-functional urethane acrylate, and di-functional or more-functional polyester acrylate. They may be used singly or in combination of two or more kinds.

The oligomer and reactive polymer having the radical polymerizable functioning group may be unsaturated polyesters (a condensate of unsaturated dicarboxylic acid and polyalcohol, and the like), polyester(meth)acrylate, polyether(meth)acrylate, polyol(meth)acrylate, epoxy(meth)acrylate, urethane(meth)acrylate, cationic polymerizable epoxy compound, homopolymers or copolymers of the above-described monomers having the radical polymerizable functioning group on the side chains thereof, and the like.

The monomer, oligomer, and reactive polymer having the cationic polymerizable functioning group may be a compound having a cationic polymerizable functional group (cationic polymerizable compound), and may be any one of the monomer, oilgomer, and prepolymer.

The cationic polymerizable functional group may be a functional group with high practicality, and for example, may be a cyclic ether group (an epoxy group, an oxetanyl group, and the like), a vinylether group, a carbonate group (a O-CO-O group), and the like.

The cationic polymerizable compound may be a cyclic ether compound (an epoxy compound, an oxetane compound, and the like), a vinyl ether compound, a carbonate-based compound (a cyclic carbonate compound, a dithiocarbonate compound, and the like), and the like.

The monomer having the cationic polymerizable functioning group may be an monomer having an epoxy group, an oxetanyl group, an oxazolyl group, a vinyl oxy group, and the like, and among them, the monomer having the epoxy group is particularly preferable.

The oligomer and reactive polymer having the cationic polymerizable functioning group may be a cationic polymerizable epoxy compound, and the like.

The non-reactive polymer may be an acrylic resin, a styrene-based resin, a polyurethane resin, a cellulose resin, a polyvinyl butyral resin, a polyester resin, a thermoplastic elastomer, and the like.

The active energy rays-curable resin composition generally includes a polymerization initiator for curing. Known polymerization initiators may be used as a polymerization initiator.

In the case of using a photoreaction, the photo-polymerization initiator may be a radical polymerization initiator and a cationic polymerization initiator.

The radical polymerization initiator may be an initiator that generates an acid by irradiating the known active energy rays, and for example, an acetophenone-based photo-polymerization initiator, a benzoin-based photo-polymerization initiator, a benzophenone-based photo-polymerization initiator, a thioxanthone-based photo-polymerization initiator, an acylphosphine oxide-based photo-polymerization initiator, and the like.

The acetophenone-based photo-polymerization initiator may be acetophenone, p-(tert-butyl)-1',1',1'-trichloroacetophenone, chloroacetophenone, 2',2'-diethoxyacetophenone, hydroxy acetophenone, 2,2-dimethoxy-2'-phenyl acetophenone, 2-amino acetophenone, dialkyl amino acetophenone, and the like.

The benzoin-based photo-polymerization initiator may be benzyl, benzoin, benzoin methyl ether, benzoin ethyl ether, benzoin isopropyl ether, benzoin isobutyl ether, 1-hydroxy cyclohexyl phenyl ketone, 2-hydroxy-2-methyl-1-phenyl-2-methyl propan-1-one, 1-(4-isopropylphenyl)-2-hydroxy-2-methyl propan-1-one, benzyl dimethyl ketal, and the like.

The benzophenone-based photo-polymerization initiator may be benzophenone, benzoylbenzoic acid, benzoylbenzoic acid methyl, methyl-o-benzoylbenzoate, 4-phenyl benzophenone, hydroxy benzophenone, hydroxypropyl benzophenone, acrylic benzophenone, 4,4'-bis(dimethylamino) benzophenone, and the like.

The thioxanthone-based photo-polymerization initiator may be thioxanthone, 2-chlorothioxanthone, 2-methyl thioxanthone, diethyl thioxanthone, dimethyl thioxanthone, and the like.

The acylphosphine oxide-based photo-polymerization initiator may be 2,4,6-trimethyl benzoyldiphenyl phosphine oxide, benzoyldiethoxy phosphine oxide, bis(2,4,6-trimethyl benzoyl)phenyl phosphine oxide, and the like.

Other radical polymerization initiators may be α-acyloxime ester, benzyl-(o-ethoxycarbonyl)-α-monooxime, glyoxyester, 3-ketokumarine, 2-ethylanthraquinone, camphorquinone, tetramethylthiuram sulfide, azobis isobutyronitrile, benzoylperoxide, dialkyl peroxide, tert-butyl peroxypivalate, and the like.

The radical polymerization initiator may be used singly or in combination of two or more kinds.

The cationic polymerization initiator may be an initiator that generates an acid by irradiating the known active energy rays, and for example, a sulfonium salt, an iodonium salt, a phosphonium salt, and the like.

The sulfonium salt may be triphenyl sulfonium hexafluorophosphate, triphenyl sulfonium hexafluoroantimonate, bis(4-(diphenyl sulfonio)-phenyl)sulfide-bis(hexafluorophosphate), bis(4-(diphenyl sulfonio)-phenyl) sulfide-bis(hexafluoroantimonate), 4-di(p-tolyl)sulfono-4'-tert-butylphenylcarbonyl-diphenylsulfidehexafluoroantimonate, 7-di(p-tolyl)sulfonio-2-isopropyl thioxanthone hexafluorophosphate, 7-di(p-tolyl)sulfonio-2-isopropyl thioxanthone hexafluoroantimonate, and the like.

The iodonium salt may be diphenyl iodonium hexafluorophosphate, diphenyl iodonium fluoroantimonate, bis(dodecyl phenyl)iodonium tetrakis(pentafluorophenyl)borate, and the like.

The phosphonium salt may be tetrafluorophosphonium hexafluorophosphate, tetrafluorophosphonium hexafluoroantimonate, and the like.

In the case of using a thermal reaction, a thermal-polymerization initiator may be organic peroxide (methyl ethyl ketone peroxide, benzoylperoxide, dicumyl peroxide, tert-butyl hydroperoxide, cumene hydroperoxide, tert-butyl peroxyoctoate, tert-butyl peroxybenzoate, lauroyl peroxide, and the like), an azo-based compound (azobis isobutyronitrile, and the like), a redox-polymerization initiator prepared by combining the above-described organic peroxide with amine (N,N-dimethyl aniline, N,N-dimethyl-p-toluidine, and the like), and the like.

An added amount of the polymerization initiator is 0.1 to 100 parts by mass with respect to 100 parts by mass of the active energy rays-curable resin composition. When the added amount of the polymerization initiator is 0.1 part by mass or more, it is easy to progress the polymerization. When the added amount of the polymerization initiator is 10 parts by mass or less, there are no cases that the obtained curable material may be colored, or mechanical strength thereof may be decreased.

In addition to the above-described contents, additives (an antistatic agent, a releasing agent, fluorine chemicals for improving an anti-fouling property, and the like), fine particles, a small quantity of solvent, and the like may be added to the in the active energy rays-curable resin composition.

### <Method for manufacturing laminate structure>

Hereinafter, an example of the method for manufacturing a laminate structure 1 using the above-described manufacturing device 30 will be described.

### (Manufacturing of article)

As illustrated in Fig. 3, the belt-shaped substrate 12 is transferred to follow the surface of the roll-shaped mold 31 that is rotated, and from the tank 32, the active energy rays-curable resin composition 18' is supplied between the substrate 12 and the mold 31.

In addition, the substrate 12 and active energy rays-curable resin composition 18' are nipped between the roll-shaped mold 31 and the nip roll 34 having the nip pressure adjusted by the air pressure cylinder 33, and the active energy rays-curable resin composition 18' is allowed to be uniformly dispersed between the substrate 12 and the mold 31, and also is filled in the pores of the microrelief structure of the mold 31.

Subsequently, the active energy rays from the active energy rays-irradiating apparatus 35 installed at the bottom of the roll-shaped mold 31 are irradiated to the active energy rays-curable resin composition 18' through the substrate 12, and then the active energy rays-curable resin composition 18' is cured to form the cured resin layer 18 transferred with the microrelief structure of the surface of the mold 31.

Subsequently, the substrate 12 formed on the surface of the cured resin layer 18 is peeled off from the roll-shaped mold 31 by the peeling roll 36, and thus, the article 10 is obtained.

As illustrated in Fig. 4, the surface of the cured resin layer 18 formed by transferring the pores 40 becomes to be a so-called Moth-Eye structure.

### (Adhering of adhesive film)

Subsequently, the article 10 is passed between a pair of nip rolls 38, and at the same time, the adhesive film 20 carried out from a device (not illustrated) for carrying out an adhesive film is supplied between the article 10 and a pair of nip rolls 38 such that the adhesive film 20 is attached to the surface of the side formed with the microrelief structure.

At this time, the article 10 is transferred between the elastic roll 38a and rigid roll 38b such that the back side (the side without the microrelief structure) of the article 10 is in contact with the rigid roll 38b.

Meanwhile, the adhesive film 20 is transferred between the elastic roll 38a and the article 10 by allowing the adhesive material layer 24 to be in contact with the surface (the surface of the side with the microrelief structure) of the article 10 and allowing the film substrate 22 to be in contact with the elastic roll 38a.

Subsequently, in a state of contacting the adhesive material layer 24 of the adhesive film 20 with the surface of the article 10, the article 10 and the adhesive film 20 is sandwiched between the elastic roll 38a and rigid roll 38b, and while the nip pressure of a pair of nip rolls 38 is adjusted by the air pressure cylinder 37, the adhesive film 20 is attached to the article 10.

In this way, as illustrated in Fig. 1, the laminate structure 1 prepared by laminating the adhesive film 20 on the microrelief structure 16-side surface of the article 10 is obtained.

Since the surface of the article 10 is in contact with the elastic roll 38a through the adhesive film 20, it is difficult to modify or damage the microrelief structure 16.

As the adhesive film 20, the film specially manufactured by the above-described method may be used or the film available from the market may be used, as long as the film has a specific adhesion strength.

Considering the manufacturing costs and the adherence purpose (preventing the fouling adherence or maintaining the shape of the microrelief structure) of the adhesive film 20, it is preferable to manufacture the laminate structure 1 by manufacturing the article 10 and then continuously attaching the adhesive film 20, as described above. However, it is not limited thereto, and after manufacturing the article 10, the article 10 is first collected, and then is transferred to other production lines, and then the adhesive film 20 may be attached to the article 10.

### <Performance effect>

Since the laminate structure of the invention described above is manufactured by using the adhesive film having a specific adhesion property, the adhesive film can be unconsciously not peeled off, can be easily processed, and can be easily peeled off with favorable workability when the adhesive film is intentionally peeled off, and also adhesive residue is very small at the microrelief structure. By the laminate structure described above, in the cases of processing, testing, storing, and exhibiting the article with the microrelief structure on the surface thereof, the microrelief structure is likely to prevent it from cracks or fouling.

### Examples

Hereinafter, the present invention will be specifically described by Examples, but the invention is not limited thereto.

### (Method for measuring peeling strength: first)

The peeling strength of an adhesive film was measured by using the following method based on JIS Z0237:2009.

### (Measuring of peeling strength of adhesive film to acrylic resin plate)

An adhesive film was cut in 25 mm × 150 mm, attached to an acrylic resin plate (ACRYLITE S manufactured by Mitsubishi Rayon Co., Ltd.) by performing 1-return of 2 kg roll, maintained in a constant temperature of 23°C for 30 minutes, and peeled off from the surface of the acrylic resin plate at 180° in a peeling speed of 0.3 m/min (in the case of measuring low-speed peeling strength (P)) or 10 m/min (in the case of measuring high-speed peeling strength (Q)) to measure the force (peeling strength) required for the peeling.

### (Measuring of peeling strength of adhesive film to microrelief structure of article)

An adhesive film was cut in 25 mm × 150 mm, attached to the microrelief structure-side surface of an article by performing 1-return of 2 kg roll, maintained in a constant temperature of 23°C for a day, and peeled off from the surface of the article at 90° in a peeling speed of 0.3 m/min to measure the force (low-speed peeling strength (T)) required for the peeling.

### (Evaluating of adhesive residue)

An opposite side to the microrelief structure-side of an article 10 of a laminate structure 1 was attached to a black acrylic resin plate (ACRYLITE EX# 502 (50mm × 60mm) manufactured by Mitsubishi Rayon Co., Ltd.) through an optical adhesive layer. After 7 days, the adhesive film was peeled off from the microrelief structure-side surface, and then a relative eflectance of the surface of the cured resin layer (the microrelief structure-side surface) was measured at an incidence angle of 5° (using an attachment of 5° regular reflection) and in a wavelength range of 380 to 780 nm using a spectrophotometer (UV-2450 manufactured by SHIMADZU CORPORATION). Then, visible reflectance was calculated based on JIS R3106. The change of visible reflectance = (visible reflectance of article after peeling off adhesive film) - (visible reflectance of article without adhesive film) was evaluated by the following evaluation criteria:
○: When the change of visible reflectance was 0.1% or less, it was deemed that there was no adhesive residue.
×: When the change of visible reflectance exceeded 0.1%, it was deemed that there was adhesive residue.

### (Method for measuring peeling strength: Second)

The peeling strength of an adhesive film was measured by using the following method. The high-speed peeling strength (S)/low-speed peeling strength (R) was evaluated by the following evaluation criteria:
○: The high-speed peeling strength (S)/low-speed peeling strength (R) was 2 or less.
×: The high-speed peeling strength (S)/low-speed peeling strength (R) exceeded 2.

### (Measuring of peeling strength of adhesive film to microrelief structure of article)

An adhesive film was cut in 25 mm × 150 mm, attached to the microrelief structure-side surface of an article by performing 1-return of 2 kg roll, maintained in a constant temperature of 23°C for 30 minutes, and peeled off from the surface of the article at 180° in a peeling speed of 0.3 m/min (in the case of measuring low-speed peeling strength (R)) or 10 m/min (in the case of measuring high-speed peeling strength (S)) to measure the force (peeling strength) required for the peeling.

### (Manufacturing of mold)

An aluminum ingot having a purity of 99.90% was subjected to a forging treatment; and a cylindrical-shaped aluminum substrate without roll marks, which was cut to be a diameter of 200 mm, an inside diameter of 155 mm, and a thickness of 350 mm, was subjected to a buffing treatment, was subjected to an electro-polishing in a mixed solution of perchloric acid and ethanol (a volume ratio of 1:4), and then was subjected to a mirror-like, finishing.

### Process (a):

The aluminum substrate having a mirror-like finished surface was subjected to an anodizing under the condition of directed current of 40 V at a bath temperature of 16°C in an aqueous solution of 0.3 M oxalic acid for 30 minutes and thus an oxide layer having a thickness of 3 µm was formed.

### Process (b):

The formed oxide layer was first dissolved in the aqueous solution prepared by mixing 6 mass% of phosphoric acid and 1.8 mass% of chromic acid, and then removed.

### Process (c):

The anodizing was again performed in the same condition as the process (a) for 30 seconds, and then an oxide layer was formed.

### Process (d):

The diameters of the pores were enlarged by immersing the oxide film at a temperature of 30°C in an aqueous solution of 5 mass% phosphoric acid for 8 minutes to enlarge the micropores of the oxide film.

### Process (e):

The processes (c) and (d) were repeated five times in total, and finally, washed to obtain the roll-shaped mold having an anodic oxide alumina on the surface thereof having a tapered micropore of approximately cone shape that has the length of 100 nm and depth of 230 nm of the micropore opening.

The mold was subjected to a releasing treatment by immersing the mold in a solution of 0.1 mass% of a releasing agent (OPTOOL DSX manufactured by DAIKIN INDUSTRIES, Ltd.) for 10 minutes and then air-drying the mold for 24 hours.

### (Active energy rays-curable resin composition A)

A condensation ester of succinic anhydride/trimethylolethane/acrylic acid (a mole ratio of 1:2:4): 45 mass by part,

1,6-hexanediol diacrylate: 45 mass by part,

X-22-1602 (radical polymerizable silicone oil manufactured by Shin-Etsu Chemical Co., Ltd.): 10 mass by part,

IRGACURE 184 (manufactured by Ciba Specialty Chemicals): 3.0 mass by part,

IRGACURE 819 (manufactured by Ciba Specialty Chemicals): 0.2 mass by part.

### (Active energy rays-curable resin composition B)

A condensation ester of succinic anhydride/trimethylolethane/acrylic acid (a mole ratio of 1:2:4): 75 mass by part,

ARONIX M260 (manufactured by Toagosei Company, Limited): 20 mass by part,

Methyl acrylate: 5 mass by part,

IRGACURE 184 (manufactured by Ciba Specialty Chemicals): 1.0 mass by part,

IRGACURE 819 (manufactured by Ciba Specialty Chemicals): 0.3 mass by part.

### (Example 1)

### Manufacturing of adhesive film:

The film was manufactured by a T-die molding method; the corona-treated surface of polypropylene (film substrate) having a thickness of 40 µm and one corona-treated surface was coated by the coating method for directly attaching an adhesive material solution dissolved with acrylic-based polymer and a cross-linking agent to be an adhesive material layer having a thickness of 5 µm after being dried; and after drying, the adhesive material layer was winded in a roll shape in the inside, and then subjected to be an aging treatment to manufacture an adhesive film A (FM-325 manufactured by DAIO PAPER CONVERTING CO., LTD.) having low-speed peeling strength (P) of 0.2 N/25 mm and high-speed peeling strength (Q) of 0.1 N/25 mm to an acrylic resin plate.

### Manufacturing of laminate structure:

The roll-shaped mold was installed at the manufacturing device 30 illustrated in Fig. 3, an article 10 was manufactured by using the following method, and then consecutively a laminate structure 1 was manufactured.

First, as illustrated in Fig. 3, the roll-shaped mold 31 was inserted into an axis core made by carbon steel for machine structure having a flow channel for cooling water therein. Subsequently, the active energy rays-curable resin composition 18' (the above-described active energy rays-curable resin composition A or B) was supplied on the surface of the substrate 12 (Acrylic film, ACRYPLEN, 340 mm of a film width and 400 m of a film length, manufactured by Mitsubishi Rayon Co., Ltd.) nipped between the nip roll 34 and roll-shaped mold 31 from the tank 32 through a supplying nozzle at room temperature. At this time, the nipping was performed by a nip roll 34 having adjusted nip pressure by an air pressure cylinder 33, and the active energy rays-curable resin composition 18' was filled even in the micropores of the mold 31.

Subsequently, while the roll-shaped mold 31 was rotated in a speed of 7.0 m per a minutes, the active energy rays-curable resin composition 18' in a state of being inserted between the mold 31 and substrate 12 was irradiated with ultraviolet rays through an ultraviolet rays-irradiating device 45 of 240 W/cm to cure the active energy rays-curable resin composition 18' as the cured resin layer 18; and then the mold 31 was peeled off by the peeling roll 36 to obtain the article 10 having the microrelief structure 16 on the surface thereof, as illustrated in Fig. 2.

By observing the surface of the article 10 through a SEM, it could be confirmed that the cured resin layer 18 had projection portions 14 having the base length of 100 nm and height of 210 nm, and the microrelief structure 16 favorably transferred with the microrelief structure of the roll-shaped mold 31 was formed.

Subsequently, the article 10 was transferred between the elastic roll 38a and rigid roll 38b such that the back side of the article 10 (the side without the microrelief structure 16) was in contact with the rigid roll 38b.

Meanwhile, the adhesive side (adhesive material layer) of the adhesive film A (FM-325 manufactured by DAIO PAPER CONVERTING CO., LTD.) having low-speed peeling strength (P) of 0.2 N/25 mm and high-speed peeling strength (Q) of 0.1 N/25 mm to an acrylic resin plate was in contact with the surface of the article 10 (the surface with the microrelief structure 16), so that the adhesive film 20 was transferred between the elastic roll 38a and article 10.

In addition, while the nip pressure of a pair of nip rolls 38 was adjusted to be 0.1 MPa to 0.5 MPa by the air pressure cylinder 37, the adhesive film 20 was attached to the surface of the article 10, and then, as illustrated in Fig. 1, a laminate structure 1 was obtained. The evaluating results are listed in Table 1.

### (Example 2)

A laminate structure was manufactured and evaluated in the same manner as Example 1 except that an adhesive film B (S-7 manufactured by DAIO PAPER CONVERTING CO., LTD.) having low-speed peeling strength (P) of 0.8 N/25 mm and high-speed peeling strength (Q) of 0.25 N/25 mm to an acrylic resin plate was used. The results are listed in Table 1.

### (Example 3)

A laminate structure was manufactured and evaluated in the same manner as Example 1 except that an adhesive film C (FM-355 manufactured by DAIO PAPER CONVERTING CO., LTD.) having low-speed peeling strength (P) of 1.0 N/25 mm and high-speed peeling strength (Q) of 0.3 N/25 mm to an acrylic resin plate was used. The results are listed in Table 1.

### (Example 4)

A laminate structure was manufactured and evaluated in the same manner as Example 1 except that low-density polyethylene was used as the material for a film substrate, and an adhesive film D (FM-125 manufactured by DAIO PAPER CONVERTING CO., LTD.) having low-speed peeling strength (P) of 0.8 N/25 mm and high-speed peeling strength (Q) of 0.3 N/25 mm to an acrylic resin plate was used. The results are listed in Table 1.

### (Example 5)

A laminate structure was manufactured and evaluated in the same manner as Example 1 except that polyethylene terephthalate (hereinafter, referred to as PET) was used as the material for a film substrate, and an adhesive film P (SATHC1138T (5)-J manufactured by Sun A. Kaken Co., Ltd.) having low-speed peeling strength (P) of 0.3 N/25 mm and high-speed peeling strength (Q) of 0.25 N/25 mm to an acrylic resin plate was used. The results are listed in Table 1.

### (Example 6)

A laminate structure was manufactured and evaluated in the same manner as Example 1 except that PET was used as the material for a film substrate, and an adhesive film Q (SATHC1138T (10)-J manufactured by Sun A. Kaken Co., Ltd.) having low-speed peeling strength (P) of 0.4 N/25 mm and high-speed peeling strength (Q) of 0.4 N/25 mm to an acrylic resin plate was used. The results are listed in Table 2.

### (Comparative Example 1)

A laminate structure was manufactured and evaluated in the same manner as Example 1 except that an adhesive film E (FM-358 manufactured by DAIO PAPER CONVERTING CO., LTD.) having low-speed peeling strength (P) of 2.5 N/25 mm and high-speed peeling strength (Q) of 1.0 N/25 mm to an acrylic resin plate was used. The results are listed in Table 2.

### (Comparative Example 2)

A laminate structure was manufactured and evaluated in the same manner as Example 1 except that an adhesive film F (FM-315 manufactured by DAIO PAPER CONVERTING CO., LTD.) having low-speed peeling strength (P) of 0.1 N/23 mm and high-speed peeling strength (Q) of 0.2 N/25 mm to an acrylic resin plate was used. The results are listed in Table 2.

### (Comparative Example 3)

A laminate structure was manufactured and evaluated in the same manner as Example 1 except that an adhesive film G (FM-330 manufactured by DAIO PAPER CONVERTING CO., LTD.) having low-speed peeling strength (P) of 0.18 N/25 mm and high-speed peeling strength (Q) of 0.8 N/25 mm to an acrylic resin plate was used. The results are listed in Table 2.

### (Comparative Example 4)

A laminate structure was manufactured and evaluated in the same manner as Example 1 except that an adhesive film H (FM-340 manufactured by DAIO PAPER CONVERTING CO., LTD.) having low-speed peeling strength (P) of 0.9 N/25 mm and high-speed peeling strength (Q) of 3.8 N/25 mm to an acrylic resin plate was used. The results are listed in Table 2.

### (Comparative Example 5)

A laminate structure was manufactured and evaluated in the same manner as Example 4 except that an adhesive film I (FM-115 manufactured by DAIO PAPER CONVERTING CO., LTD.) having low-speed peeling strength (P) of 0.25 N/25 mm and high-speed peeling strength (Q) of 0.55 N/25 mm to an acrylic resin plate was used. The results are listed in Table 3.

### (Comparative Example 6)

A laminate structure was manufactured and evaluated in the same manner as Example 4 except that an adhesive film J (FM-830 manufactured by DAIO PAPER CONVERTING CO., LTD.) having low-speed peeling strength (P) of 0.35 N/25 mm and high-speed peeling strength (Q) of 1.85 N/25 mm to an acrylic resin plate was used. The results are listed in Table 3.

### (Comparative Example 7)

A laminate structure was manufactured and evaluated in the same manner as Example 4 except that an adhesive film K (FM-840 manufactured by DAIO PAPER CONVERTING CO., LTD.) having low-speed peeling strength (P) of 1.05 N/25 mm and high-speed peeling strength (Q) of 4.0 N/25 mm to an acrylic resin plate was used. The results are listed in Table 3.

### (Comparative Example 8)

A laminate structure was manufactured and evaluated in the same manner as Example 4 except that an adhesive film L (FM-875 manufactured by DAIO PAPER CONVERTING CO., LTD.) having low-speed peeling strength (P) of 2.5 N/25 mm and high-speed peeling strength (Q) of 0.9 N/25 mm to an acrylic resin plate was used. The results are listed in Table 3.

### (Comparative Example 9)

A laminate structure was manufactured and evaluated in the same manner as Example 1 except that PET was used as the material for a film substrate, and an adhesive film R (SATHC2025P manufactured by Sun A. Kaken Co., Ltd.) having low-speed peeling strength (P) of 0.15 N/25 mm and high-speed peeling strength (Q) of 1.5 N/25 mm to an acrylic resin plate was used. The results are listed in Table 3.

### (Comparative Example 10)

A laminate structure was manufactured and evaluated in the same manner as Example 1 except that PET was used as the material for a film substrate, and an adhesive film S (GP50T-A75 manufactured by PANAC INDUSTRIES, INC.) having low-speed peeling strength (P) of 0.11 N/25 mm and high-speed peeling strength (Q) of 0.41 N/25 mm to an acrylic resin plate was used. The results are listed in Table 4.

### (Comparative Example 11)

A laminate structure was manufactured and evaluated in the same manner as Example 1 except that PET was used as the material for a film substrate, butylacrylate was used as the material for an adhesive material, and an adhesive film T having low-speed peeling strength (P) of 0.34 N/25 mm and high-speed peeling strength (Q) of 0.89 N/25 mm to an acrylic resin plate was used. The results are listed in Table 4.

**[Table 1]**

| | Example 1 | Example 2 | Example 3 | Example 4 | Example 5 |
|---|---|---|---|---|---|
| Adhesive film | A | B | C | D | P |
| With respect to acrylic resin plate | | | | | |
| High-speed peeling strength (Q) [N/25 mm] | 0.10 | 0.25 | 0.30 | 0.30 | 0.25 |
| Low-speed peeling strength (P) [N/25 mm] | 0.20 | 0.80 | 1.00 | 0.80 | 0.30 |
| High-speed peeling strength (Q)/ Low-speed peeling strength (P) | 0.50 | 0.31 | 0.30 | 0.38 | 0.83 |

| With respect to microrelief structure of article (active energy rays-curable resin composition A) | | | | | |
|---|---|---|---|---|---|
| Low-speed peeling strength (T) [N/25 mm] | 0.02 | 0.14 | 0.27 | 0.03 | 0.02 |
| Change of visible reflectance [%] | 0.02 | 0.09 | 0.10 | 0.06 | 0.03 |
| Decision | ○ | ○ | ○ | ○ | ○ |

| With respect to microrelief structure of article (active energy rays-curable resin composition B) | | | | | |
|---|---|---|---|---|---|
| Low-speed peeling strength (T) [N/25 mm] | 0.07 | 1.20 | 3.55 | 0.12 | 0.18 |
| Change of visible reflectance [%] | 0.01 | 0.01 | 0.02 | 0.05 | 0.00 |
| Decision | ○ | ○ | ○ | ○ | ○ |

| With respect to microrelief structure of article (active energy rays-curable resin composition A) | | | | | |
|---|---|---|---|---|---|
| High-speed peeling strength (S) [N/25 mm] | 0.02 | 0.02 | 0.03 | 0.02 | 0.02 |
| Low-speed peeling strength (R) [N/25 mm] | 0.01 | 0.04 | 0.06 | 0.02 | 0.01 |
| High-speed peeling strength (S)/Low-speed peeling strength (R) | 2.0 | 0.5 | 0.5 | 1.0 | 1.7 |
| Decision | ○ | ○ | ○ | ○ | ○ |

| With respect to microrelief structure of article (active energy rays-curable resin composition B) | | | | | |
|---|---|---|---|---|---|
| High-speed peeling strength (S) [N/25 mm] | 0.02 | 0.37 | 2.01 | 0.05 | 0.18 |
| Low-speed peeling strength (R) [N/25 mm] | 0.02 | 0.37 | 1.21 | 0.05 | 0.10 |
| High-speed peeling strength (S)/ Low-speed peeling strength (R) | 1.0 | 1.0 | 1.7 | 1.0 | 1.8 |
| Decision | ○ | ○ | ○ | ○ | ○ |

**[Table 2]**

| | Example 6 | Comparative Example 1 | Comparative Example 2 | Comparative Example 3 | Comparative Example 4 |
|---|---|---|---|---|---|
| Adhesive film | Q | E | F | G | H |
| With respect to acrylic resin plate | | | | | |
| High-speed peeling strength (Q) [N/25 mm] | 0.40 | 1.00 | 0.20 | 0.80 | 3.80 |
| Low-speed peeling strength (P) [N/25 mm] | 0.40 | 2.50 | 0.10 | 0.18 | 0.90 |
| High-speed peeling strength (Q)/Low-speed peeling strength (P) | 1.00 | 0.40 | 2.00 | 4.44 | 4.22 |

| With respect to microrelief structure of article (active energy rays-curable resin composition A) | | | | | |
|---|---|---|---|---|---|
| Low-speed peeling strength (T) [N/25 mm] | 0.03 | 0.55 | 0.01 | 0.04 | 1.25 |
| Change of visible reflectance [%] | 0.02 | 0.46 | 0.83 | 0.22 | 1.93 |
| Decision | ○ | × | × | × | × |

| With respect to microrelief structure of article (active energy rays-curable resin composition B) | | | | | |
|---|---|---|---|---|---|
| Low-speed peeling strength (T) [N/25 mm] | 0.19 | 3.60 | 0.06 | 0.17 | 2.30 |
| Change of visible reflectance [%] | 0.00 | 0.47 | 1.64 | 0.32 | 1.50 |
| Decision | ○ | × | × | × | × |

| With respect to microrelief structure of article (active energy rays-curable resin composition A) | | | | | |
|---|---|---|---|---|---|
| High-speed peeling strength (S) [N/25 mm] | 0.03 | 0.05 | 0.02 | 0.05 | 0.83 |
| Low-speed peeling strength (R) [N/25 mm] | 0.02 | 0.1 | 0.01 | 0.03 | 0.12 |
| High-speed peeling strength (S)/ Low-speed peeling strength (R) | 1.8 | 0.5 | 2.0 | 1.7 | 6.9 |
| Decision | ○ | ○ | ○ | ○ | × |

| With respect to microrelief structure of article (active energy rays-curable resin composition B) | | | | | |
|---|---|---|---|---|---|
| High-speed peeling strength (S) [N/25 mm] | 0.18 | 3.68 | 0.02 | 0.2 | 8.82 |
| Low-speed peeling strength (R) [N/25 mm] | 0.10 | 2.84 | 0.02 | 0.06 | 0.69 |
| High-speed peeling strength (S)/ Low-speed peeling strength (R) | 1.8 | 1.3 | 1.0 | 3.3 | 12.8 |
| Decision | ○ | ○ | ○ | × | × |

**[Table 3]**

| | Comparative Example 5 | Comparative Example 6 | Comparative Example 7 | Comparative Example 8 | Comparative Example 9 |
|---|---|---|---|---|---|
| Adhesive film | I | J | K | L | R |
| With respect to acrylic resin plate | | | | | |
| High-speed peeling strength (Q) [N/25 mm] | 0.55 | 1.85 | 4.00 | 0.90 | 1.50 |
| Low-speed peeling strength (P) [N/25 mm] | 0.25 | 0.35 | 1.05 | 2.50 | 0.15 |
| High-speed peeling strength (Q)/ Low-speed peeling strength (P) | 2.20 | 5.29 | 3.81 | 0.36 | 10.00 |

| With respect to microrelief structure of article (active energy rays-curable resin composition A) | | | | | |
|---|---|---|---|---|---|
| Low-speed peeling strength (T) [N/25 mm] | 0.04 | 0.06 | 1.60 | 2.05 | 0.05 |
| Change of visible reflectance [%] | 1.11 | 0.28 | 2.05 | 0.81 | 0.16 |
| Decision | × | × | × | × | × |

| With respect to microrelief structure of article (active energy rays-curable resin composition B) | | | | | |
|---|---|---|---|---|---|
| Low-speed peeling strength (T) [N/25 mm] | 0.12 | 0.29 | 2.70 | 3.55 | 0.14 |
| Change of visible reflectance [%] | 1.83 | 0.32 | 1.60 | 0.56 | 0.15 |
| Decision | × | × | × | × | × |

| With respect to microrelief structure of article (active energy rays-curable resin composition A) | | | | | |
|---|---|---|---|---|---|
| High-speed peeling strength (S) [N/25 mm] | 0.02 | 0.09 | 2.11 | 0.15 | 0.11 |
| Low-speed peeling strength (R) [N/25 mm] | 0.02 | 0.04 | 0.21 | 0.2 | 0.04 |
| High-speed peeling strength (S)/ Low-speed peeling strength (R) | 1.0 | 2.3 | 10.0 | 0.8 | 2.79 |
| Decision | ○ | × | × | ○ | × |

| With respect to microrelief structure of article (active energy rays-curable resin composition B) | | | | | |
|---|---|---|---|---|---|
| High-speed peeling strength (S) [N/25 mm] | 0.08 | 0.4 | 7.74 | 4.02 | 0.63 |
| Low-speed peeling strength (R) [N/25 mm] | 0.03 | 0.08 | 1.35 | 2.4 | 0.20 |
| High-speed peeling | 2.7 | 5.0 | 5.7 | 1.7 | 3.1 |
| strength (S)/ Low-speed peeling strength (R) | | | | | |
| Decision | × | × | × | ○ | × |

**[Table 4]**

| | Comparative Example 10 | Comparative Example 11 |
|---|---|---|
| Adhesive film | S | T |
| With respect to acrylic resin plate | | |
| High-speed peeling strength (Q) [N/25 mm] | 0.41 | 0.89 |
| Low-speed peeling strength (P) [N/25 mm] | 0.11 | 0.34 |
| High-speed peeling strength (Q)/ Low-speed peeling strength (P) | 3.73 | 2.62 |

| With respect to microrelief structure of article (active energy rays-curable resin composition A) | | |
|---|---|---|
| Low-speed peeling strength (T) [N/25 mm] | 3.00 | 0.06 |
| Change of visible reflectance [%] | 0.22 | 0.00 |
| Decision | × | ○ |

| With respect to microrelief structure of article (active energy rays-curable resin composition B) | | |
|---|---|---|
| Low-speed peeling strength (T) [N/25 mm] | 4.29 | 0.25 |
| Change of visible reflectance [%] | 0.78 | 0.00 |
| Decision | × | ○ |

| With respect to microrelief structure of article (active energy rays-curable resin composition A) | | |
|---|---|---|
| High-speed peeling strength (S) [N/25 mm] | 6.22 | 0.18 |
| Low-speed peeling strength (R) [N/25 mm] | 2.50 | 0.06 |
| High-speed peeling strength (S)/ Low-speed peeling strength (R) | 2.49 | 3.0 |
| Decision | × | × |

| With respect to microrelief structure of article (active energy rays-curable resin composition B) | | |
|---|---|---|
| High-speed peeling strength (S) [N/25 mm] | 9.24 | 0.74 |
| Low-speed peeling strength (R) [N/25 mm] | 4.50 | 0.25 |
| High-speed peeling strength (S)/ Low-speed peeling strength (R) | 2.05 | 3.0 |
| Decision | × | × |

As can be clearly seen from Tables 1 and 2, in the cases of Examples 1 to 6 using the adhesive film having low-speed peeling strength (P) of less than 2.5 N/25 mm and high-speed peeling strength (Q)/low-speed peeling strength (P) of less than 2 to the acrylic resin plate, the high-speed peeling strength (S)/low-speed peeling strength (R) of the adhesive film to the microrelief structure is 2 or less; peeling workability is favorable; and the change of visible reflectance after peeling off the adhesive film is sufficiently small, thereby maintaining the low reflection property.

Meanwhile, as can be clearly seen from Tables 2 to 4, in the cases of Comparative Examples 1 to 11 using the adhesive film having low-speed peeling strength (P) of 2.5 N/25 mm or more and/or the high-speed peeling strength (Q)/low-speed peeling strength (P) of 2 or more to the acrylic resin plate, the change of visible reflectance after peeling off the adhesive film is large, and thus, the low reflection property cannot be maintained. In addition, the high-speed peeling strength (S)/low-speed peeling strength (R) of the adhesive film to the microrelief structure exceeds 2, and thus, the peeling workability is deteriorated.

### INDUSTRIAL APPLICABILITY

The laminate structure is useful as an optical article, particularly, antireflection articles, such as an anti-reflection film, in which the microrelief structure is protected from cracks or the adherence of stains during a processing step or the period from shipping to using.

### EXPLANATIONS OF LETTERS OR NUMERALS

1: Laminate structure
10: Article
14: Projection portion
16: Microrelief structure
20: Adhesive film
40: Micropore
41: Oxide layer

## Claims

1. A laminate structure comprising:
an article having a microrelief structure on a surface thereof; and
an adhesive film that is in contact with a microrelief structure-side surface of the article,
wherein an average interval between projection portions in the microrelief structure is 400 nm or less,
a low-speed peeling strength (P) of the adhesive film measured by the following method based on JIS Z0237:2009 is 0.01 N/25 mm or more and less than 2.5 N/25 mm, and
a ratio between a high-speed peeling strength (Q) and the low-speed peeling strength (P) (high-speed peeling strength (Q)/low-speed peeling strength (P)) of the adhesive film measured by the following method based on JIS Z0237:2009 is less than 2:
(Method for measuring peeling strength: first)
The adhesive film is put on the surface of an acrylic resin plate such that the surface of the side being in contact with the microrelief structure-side surface of the article is contacted to the acrylic resin plate; then the adhesive film is attached to the acrylic resin plate by performing 1-return of 2 kg roll on the adhesive film; the attached adhesive film is left under a constant temperature of 23°C for 30 minutes; and then the adhesive film is peeling off in 180° to the surface of the acrylic resin plate at a peeling speed of 0.3 m/min (in the case of measuring the low-speed peeling strength (P)) or 10 m/min (in the case of measuring the high-speed peeling strength (Q)) to measure the peeling strength required for the peeling.

2. The laminate structure according to claim 1, wherein the low-speed peeling strength (P) of the adhesive film is 1.0 N/25 mm or less.

3. The laminate structure according to claim 1, wherein a ratio between a high-speed peeling strength (S) and a low-speed peeling strength (R) (high-speed peeling strength (S)/low-speed peeling strength (R)) of the adhesive film measured by the following method is 2 or less:
(Method for measuring peeling strength: second)
The adhesive film is put on the surface of the article such that the surface of the side being in contact with the microrelief structure-side surface of the article is contacted to the article; then the adhesive film is attached to the microrelief structure by performing 1-return of 2 kg roll on the adhesive film; the attached adhesive film is left under a constant temperature of 23°C for 30 minutes; and then the adhesive film is peeled off in 180° to the microrelief structure-side surface at a peeling speed of 0.3 m/min (in the case of measuring the low-speed peeling strength (R)) or 10 m/min (in the case of measuring the high-speed peeling strength (S)) to measure the peeling strength required for the peeling.

4. The laminate structure according to any one of claims 1 to 3, wherein the microrelief structure is the structure prepared by transferring a microrelief structure of anodized alumina.
